# EUROPÄISCHE PATENTANMELDUNG

(11) **EP 0 617 266 A2**
(43) Veröffentlichungstag der Anmeldung: **28.09.1994**
(21) Anmeldenummer: 94104189.9
(22) Anmeldetag: 17.03.1994
(51) Int. Cl.: G01L 5/24, G01D 1/12, G01D 1/02

(54) **Vorrichtung und Verfahren zum Ermitteln geeigneter Anzugsmomente für Schraubenverbindungen**

(30) Priorität: 20.03.1993 DE 4309016
(71) Anmelder: WEBASTO KAROSSERIESYSTEME GmbH, D-82131 Stockdorf (DE)
(72) Erfinder: König, Klaus, D-80689 München (DE); Dittrich, Wolfgang, D-86165 Augsburg (DE); Mathias, Rainer, D-82327 Tutzing (DE)
(74) Vertreter: Wiese, Gerhard

(57) **Zusammenfassung**

Die Erfindung betrifft eine Vorrichtung und ein Verfahren zum Ermitteln geeigneter Anzugsmomente für Schraubverbindungen mit selbstschneidenden Schrauben. Während bekannte Vorrichtungen das Ermitteln, Anzeigen und Speichern von Maximalwerten mittels eines Drehmomentaufnehmers und eines daran angeschlossenen Rechners ermöglichen, werden bei der Erfindung neben dem Maximalwert, der das Überdrehmoment Mü repräsentiert, auch ein davorliegender, relativer Maximalwert M_{E} aufgezeichnet, der von einem Schrauber zum Einfurchen der Gewinderillen aufgebracht werden muß. Die Vorrichtung und das Verfahren gemäß der Erfindung ermitteln die Differenz zwischen diesen beiden Drehmomentwerten und ermöglichen in einer vorteilhaften Weiterbildung sowohl eine statistische Mittelwertbildung aus einer Serie von mehreren Messungen als auch das automatische Berechnen eines empfohlenen Anzugsmomentes für einen Schrauber.

## Beschreibung

Die Erfindung betrifft eine Vorrichtung und ein Verfahren zum Ermitteln geeigneter Anzugsmomente für Schraubverbindungen mit selbstschneidenden Schrauben, mit einem Drehmomentaufnehmer sowie einer Speicher- und Anzeigeeinheit für die von diesem ermittelten Meßwerte und mit einem digitalen Rechner zur Auswertung der Meßwerte.

Derartige bekannte Vorrichtungen, wie sie nach dem Kenntnisstand der Anmelderin bei Schraubenherstellern stationär eingesetzt werden, zeichnen in einem digitalen Rechner die während eines Einschraubversuches von einem Drehmomentaufnehmer aufgenommenen Werte auf und berechnen nach Abschluß des Einschraubversuches aus diesen Werten den Maximalwert. Dieser wird an einer Anzeigeeinheit angezeigt und gegebenenfalls mittels eines Druckers ausgedruckt. Die Vorrichtung und das dabei verwendete Verfahren haben den Nachteil, daß der damit ermittelte Maximalwert, der dem Überdrehmoment der Schraubverbindung entspricht, einen nur unzureichenden Anhaltspunkt für das bei einer Serie von Verschraubungen im Betrieb zu wählende Anzugsmoment gibt. Das bei selbstschneidenden Schrauben typischerweise vor dem Erreichen des Überdrehmomentes auftretende relative Maximum beim Einfurchen der Gewindegänge in das Material wird dabei nicht berücksichtigt, sodaß mittels des Spitzenwertes keine geeignete Aussage über ein prozeßsicheres Anzugsmoment für Serienverschraubungen getroffen werden kann.

Der vorliegenden Erfindung liegt die Aufgabe zugrunde, diesen Mißstand zu beseitigen.

Diese Aufgabe wird mittels einer Vorrichtung mit den im Anspruch 1 angegebenen kennzeichnenden Merkmalen gelöst. Sie wird ferner durch ein Verfahren gemäß dem Patentanspruch 10 gelöst. Dadurch, daß der Rechner aus den Meßwerten eines vorgegebenen ersten Zeitintervalles zunächst einen relativen Maximalwert ermittelt und diesen einem in einem zweiten Zeitintervall ermittelten absoluten Maximalwert unter Bildung einer Differenz aus beiden gegenüberstellt, wird dem Bediener der Vorrichtung bzw. dem Anwender des Verfahrens ein Wertebereich an die Hand gegeben, innerhalb dessen eine prozeßsichere Serienverschraubung möglich ist.

Vorteilhaft ist eine Vorrichtung, bei der das erste und gegebenenfalls auch das zweite Zeitintervall mittels des Rechners ermittelt werden. Dafür ist ein Softwarealgorithmus besonders geeignet, der aus zwei oder mehreren benachbarten Meßwerten die Steigung der Drehmomentkurve ermittelt. Dabei wird der Ablauf des Zeitintervalles T₁ vorteilhaft so festgelegt, daß dieses bei einem relativen Minimum (Steigung = Null) nach Durchlaufen des ersten relativen Maximums liegt. Das Ende des zweiten Zeitintervalles, das vorteilhaft das erste Zeitintervall mitumfaßt, wird so festgelegt, daß es nach Durchlaufen eines absoluten Maximalwertes mit einer darauffolgenden abfallenden Flanke der Drehmomentkurve einem vorgegebenen Minimalwert entspricht.

In einer vereinfachten Ausführungsform ist das erste Zeitintervall und gegebenenfalls das zweite Intervall manuell von einem Bediener eingebbar, nachdem dieser beispielsweise einen ersten Einschraubversuch gefahren hat und die dabei aufgezeichnete Drehmomentkurve an einer Anzeigeeinrichtung verfolgt hat.

Besonders vorteilhaft ist eine Vorrichtung, bei der der Rechner nach einer Serie von Einschraubversuchen aus den ermittelten Einzelwerten für das Einfurchmoment, das Überdrehmoment und das aus diesen gebildete Differenzmoment für eine Auswertung die Mittelwerte einer Versuchsreihe bildet. Besonders vorteilhaft ist eine Vorrichtung, bei der der Rechner zur Ausgabe der Speicher-und/oder Mittelwerte mit einem Drucker oder Plotter verbunden ist.

Es ist ferner vorteilhaft, wenn die Vorrichtung für einen mobilen Einsatz als tragbare Kompakteinheit ausgebildet ist. Dadurch wird sie auch für eine Überprüfung von Schraubverbindungen zur Qualitätskontrolle während des laufenden Serieneinsatzes geeignet.

Eine vorteilhafte Weiterbildung eines erfindungsgemäßen Verfahrens besteht dahin, daß hintereinander mehrfach für mehrere gleichartige Schrauben das relative Maximum, das absolute Maximum und deren Differenzwert ermittelt werden und daß anschließend Mittelwerte über die dabei gefundenen Einzelwerte gebildet werden. Dadurch wird über eine Versuchsreihenauswertung auch bei streuenden Einzelwerten eine zuverlässige Festlegung eines geeigneten Anzugsmoments ermöglicht. Dieses Anzugsmoment liegt vorteilhaft in einem Bereich, der sich durch Addition des mittleren Einfurchmomentes und eines Anteils des Differenzmomentes zwischen Einfurch- und Überdrehmoment ergibt. Dieser durch einen Faktor x gekennzeichnete Wert liegt zweckmäßigerweise zwischen 0,1 und 0,9, vorzugsweise bei 0,5. Der derart rechnerisch ermittelte Wert wird zweckmäßigerweise zur Voreinstellung des übertragenen Drehmoments eines motorisch betriebenen Schraubers verwertet.

Nachfolgend ist ein Ausführungsbeispiel der Erfindung anhand der Zeichnung erklärt. Es zeigt:
Fig. 1 eine schematische Darstellung einer Vorrichtung,
Fig. 2 den Verlauf eines Drehmoments über der Zeit beim Einschrauben in Form eines Diagrammes,
Fig. 3 ein Flußdiagramm zur Verdeutlichung der Verfahrensschritte beim Ablauf einer Messung.
Fig. 4 einen Ausdruck mit einer Auswertung einer Meß-Serie.

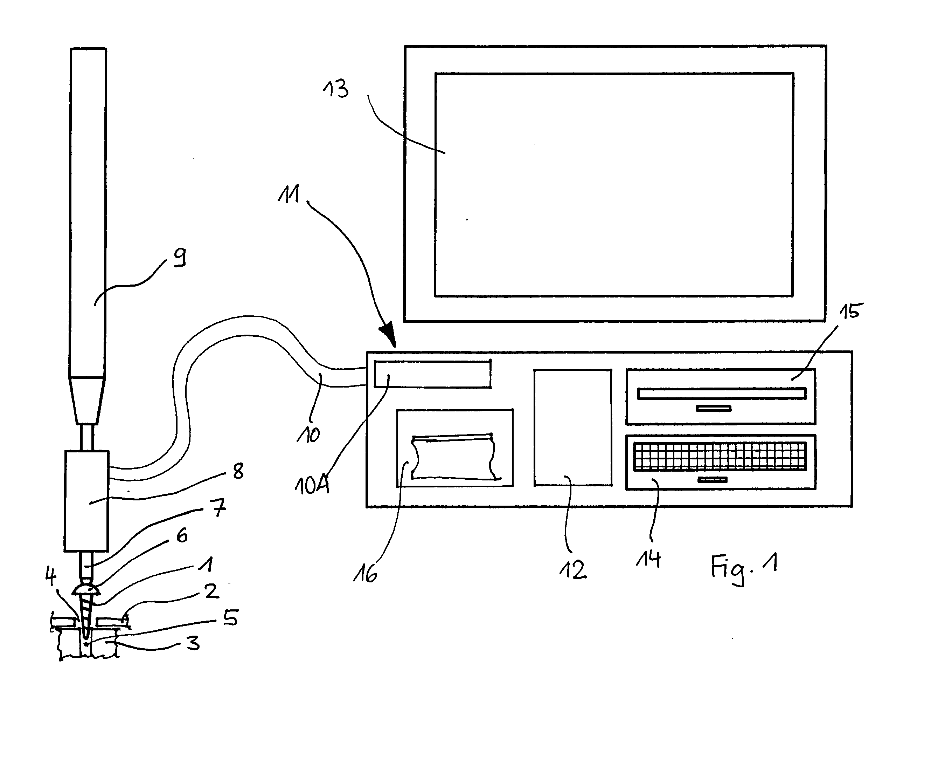

In Fig. 1 ist eine mit einem selbstschneidenden Gewinde versehene Schraube 1 zur Verbindung zweier Teile 2 bzw. 3 durch ein Durchgangsloch 4 im ersten zu verbindenden Teil 2 hindurchgesteckt und an das Kernloch 5 des zweiten zu verbindenden Teils 3 angesetzt. Am Schraubenkopf 6 der Schraube 1 greift ein Werkzeug 7 an, das über einen zwischengeschalteten Drehmomentaufnehmer 8 mit einem Schrauber 9 verbunden ist, der motorisch angetrieben wird.

Der Drehmomentaufnehmer 8 steht über eine Leitung 10 mit einem Analog-/Digital-wandler 10A eines insgesamt mit 11 bezeichneten Rechners in Verbindung. Der Rechner 11 verfügt über einen flüchtigen Speicher 12 mit mehreren Speicherplätzen m zur Aufzeichnung der mittels der Analog-/Digital-Wandlerkarte 10A aus den mittels des Drehmomentaufnehmers 8 erzeugten analogen Meßwerten gewonnenen Daten. Der Rechner 11 verfügt ferner über eine Anzeigeeinheit 13 in Form eines Bildschirms oder eines LCD-Bildschirms sowie über eine Festplatte 14 und ein Diskettenlaufwerk 15 zum dauerhaften Speichern von Daten und Programmen. Mit dem Rechner 11 verbunden, oder wie dargestellt, in diesen integriert ist ein Drucker 16, der zur Ausgabe von Daten dient.

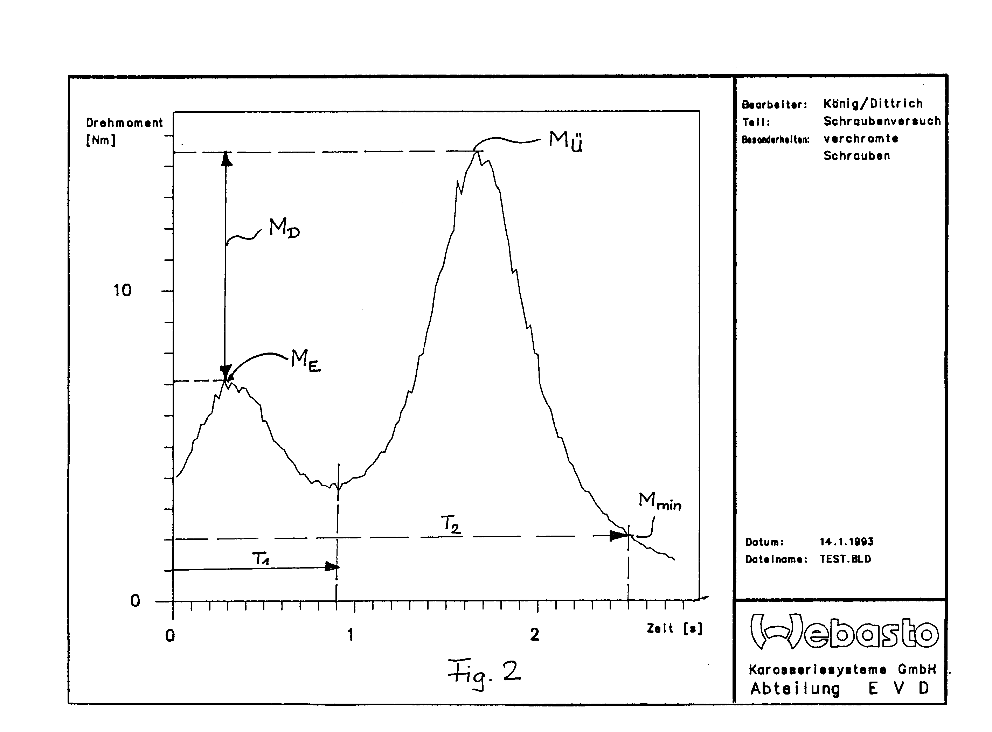

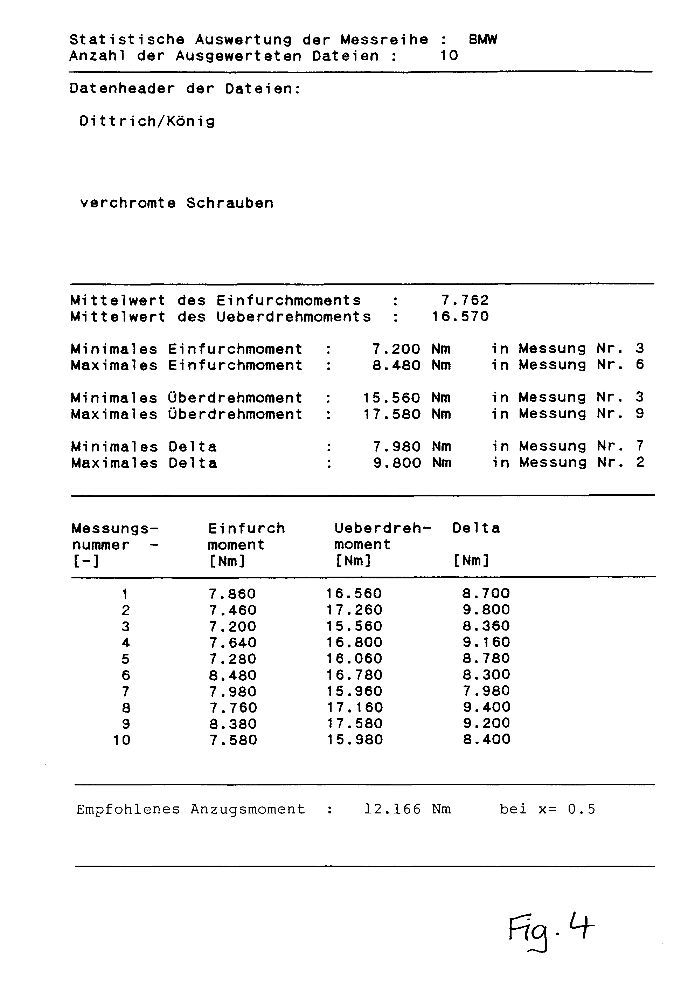

In Fig. 2 ist der typische Verlauf einer Drehmomentkurve beim Einschrauben einer selbstschneidenden Schraube 1 dargestellt. Zur Startzeit T = 0 beginnt der Schrauber 9 bei in das Kernloch 5 eingesteckter Schraube 1 mit einem bestimmten Drehmoment (im Beispiel etwa 4 Nm) die Schraube 1 in das Teil 3 einzudrehen. Das Drehmoment steigt in einem ersten Zeitintervall T₁ zunächst bis auf ein relatives Maximum M_{E} an und fällt anschließend etwa auf den Ausgangswert zurück. Dieser Ablauf entspricht dem Einschneiden der Gewindegänge in das Teil 3. Das relative Maximum M_{E} wird allgemein als Einfurchmoment bezeichnet. In einem anschließenden Zeitabschnitt steigt das Drehmoment langsam unter verstärktem Zusammenpressen der beiden Teile 2 und 3 bis auf einen Maximalwert Mü an, um anschließend kontinuierlich bis auf einen Wert M_{Ümin} abzufallen, der unterhalb des Anfangswertes liegt. Das maximale Moment Mü entspricht dem Überdrehmoment, d.h. mit diesem Moment ist die größte Vorspannkraft für die Verbindung der Teile 2 und 3 erzeugbar. Anschließend ist die Schraube 1 überdreht und der Zusammenhalt der Schraubverbindung läßt rapide nach. In der Praxis darf daher dieses Überdrehmoment Mü keineswegs erreicht oder gar überschritten werden. Andererseits muß das am motorisch betätigten Schrauber 9 einstellbare Anzugsmoment M_{A} groß genug sein, um das Einfurchmoment M_{E} aufzubringen. Für eine prozeßsichere Verschraubung von Teilen 2, 3 in der Großserienfertigung ist ein Anzugsmoment M_{A} geeignet, daß sich oberhalb des Einfurchmoments M_{E}, jedoch unterhalb des Überdrehmomentes Mü bewegt. Mittels der erfindungsgemäßen Vorrichtung werden daher außer dem Wert Mü auch der Wert M_{E} aufgezeichnet und die Differenz aus beiden Werten gebildet. Der Speicher 12 ist in der Lage, eine Serie von Einschraubversuchen aufzuzeichnen, wobei der Rechner 11 aus den dabei gewonnenen Meßwerten Mittelwerte bildet und vorzugsweise ein geeignetes Anzugsmoment M_{A} vorschlägt. Ein durch den Drucker 16 erzeugter Ausdruck einer Serie von 10 Einschraubversuchen mit dem Mittelwert, dem minimalen und dem maximalen Wert des Einfurchmomentes M_{E}, den gleichen Werten für das Überdrehmoment Mü sowie des minimalen und des maximalen, dort mit Delta bezeichneten Differenzmomentes zwischen diesen beiden Momenten und das empfohlene Anzugsmoment M_{A} sind in Fig. 4 dargestellt. Das empfohlene Anzugsmoment M_{A} wird vom Rechner 11 unter Berücksichtigung des maximalen Einfurchmomentes M_{E} und des minimalen Überdrehmomentes Mü sowie der ermittelten Mittelwerte berechnet.

Das Überdrehmoment Mü einer einzelnen Messung wird, wie in Fig. 2 zu ersehen, als absolutes Maximum während eines Zeitintervalles T₂ errechnet. Ebenso wird das Einfurchmoment M_{E} als relatives Maximum in einem Zeitintervall T₁ berechnet. Diese Zeitintervalle Ti, T₂ können entweder von einem Bediener der Vorrichtung nach Aufzeichnen eines ersten Einschraubversuches manuell in den Rechner eingegeben werden, sie können jedoch auch von einer Software durch Berechnung der ersten und zweiten Ableitung der Drehmomentkurve berechnet werden. Das Zeitintervall T₂ kann auch durch das Erreichen eines vorgegebenen minimalen Drehmomentwertes M_{Emin} flexibel gehalten werden.

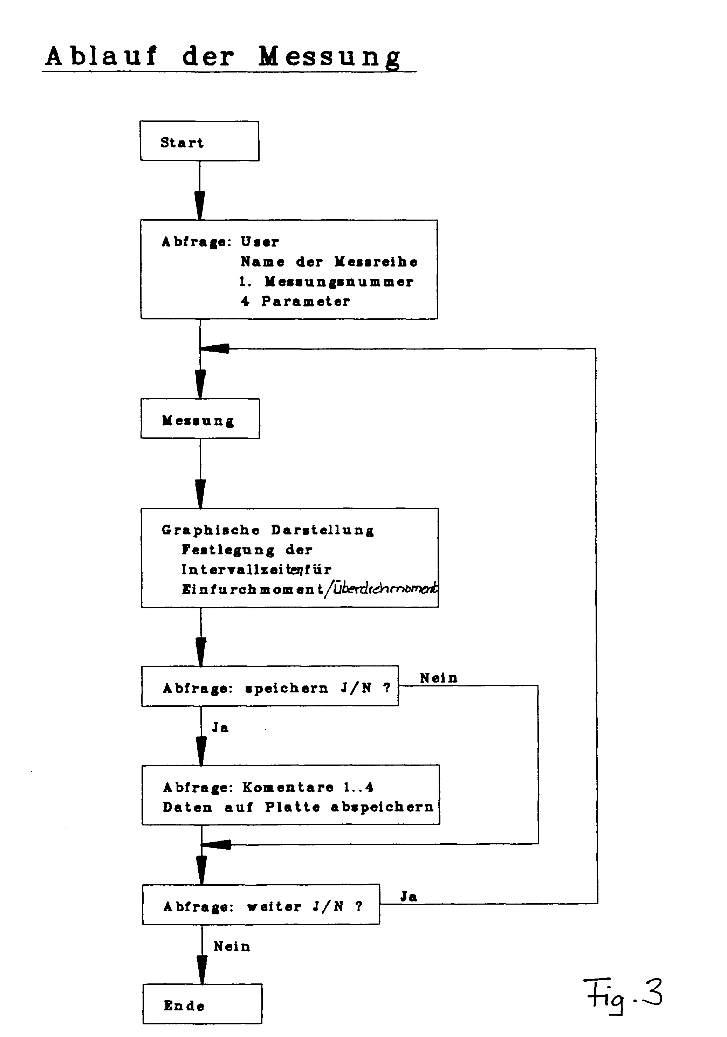

Im Flußdiagramm gemäß Fig. 3 ist ein einfaches Verfahren mit einer solchen manuellen Einstellung der Intervallzeiten T₁ und T₂ dargestellt. Nach dem Programmstart des Rechners 11 werden in einem ersten Schritt der Benutzer, der Name der Meßreihe, die erste Messungsnummer sowie weitere Parameter über die verwendeten Schrauben eingegeben. Dann wird der Schrauber 9 gestartet und die erste Messung beginnt. Die ermittelten Meßwerte werden analog zu ihrer Abspeicherung im Speicher 12 über die Anzeigeeinrichtung 13 in Form einer Kurve (Fig. 2) dargestellt. Nach Beendigung des ersten Einschraubversuches werden durch den Bediener anhand dieser graphischen Darstellung und der am unteren Rand eingeblendeten zugehörigen Zeitleiste manuell die Werte T₁ und T₂ für das erste und das zweite Zeitintervall eingestellt. Es folgt eine Abfrage, ob dieser erste Einschraubversuch bereits aufgezeichnet werden soll oder nicht. Bei einer positiven Beantwortung können entsprechende Kommentare eingegeben werden und anschließend werden die Daten auf der Festplatte 14 gespeichert. Wird die folgende Frage, ob weitere Versuche gefahren werden sollen, positiv beantwort, so wiederholt sich der Vorgang mit der zweiten Messung. Gemäß dem Flußdiagramm in Fig. 3 ist dabei bei jeder Messung eine manuelle Korrektur der Intervallzeiten T₁ und T₂ möglich. In einer alternativen Ausführungsform ist die Eingabe dieser Intervallzeiten nur nach der ersten Messung vorgesehen, bei weiteren Messungen wird diese Abfrage weggelassen. Wenn die vorgesehene Zahl von Einschraubversuchen absolviert ist, wird die Frage "Weitere Versuche; ja oder nein" mit nein beantwortet und das Programm damit beendet. Auf Grund der anschließend berechneten Mittelwerte sowie der Anzeige der minimalen und maximalen Einfurch- und Überdrehmomente läßt sich ein empfohlenes Anzugsmoment M_{A} berechnen, das eine prozeßsichere Verschraubung von Teilen in der Großserie ermöglicht.

Mittels der erfindungsgemäßen Vorrichtung und des vorstehend beschriebenen Verfahrens läßt sich in einfacher Weise auch bei mobilen Einsatzfällen, wie der Qualitätskontrolle von Schraubverbindungen in der Serienfertigung ein komfortables Messen und Aufzeichnen der ermittelten Meßwerte realisieren. Einem Protokoll, wie es in Fig. 4 dargestellt ist, kommt im Zuge der wachsenden Anforderung an die Dokumentation von Fertigungsparametern im Hinblick auf die Produkthaftung besondere Bedeutung zu.

### Bezugszeichen

1 Schraube
2 Teil
3 Teil
4 Durchgangsloch
5 Kernloch
6 Schraubenkopf
7 Werkzeug
8 Drehmomentaufnehmer
9 Schrauber
10 Leitung
10A A/D-Wandler
11 Rechner
12 Speicher
13 Anzeigeeinheit
14 Festplatte
15 Diskettenlaufwerk
16 Drucker
Mü Überdrehmoment
M_{E} Einfurchmoment
M_{A} Anzugsmoment
M, Differenzmoment

## Patentansprüche

1. Vorrichtung zum Ermitteln geeigneter Anzugsmomente (M_{A}) für Schraubverbindungen mit selbstschneidenden Schrauben (1), mit einem Drehmomentaufnehmer (8) sowie einer Speicher- (12) und Anzeigeeinheit (13) für die von diesem ermittelten Meßwerte und mit einem digitalen Rechner (11) zur Auswertung der Meßwerte, dadurch gekennzeichnet,
- daß der Rechner (11) aus den Meßwerten in einem vorgegebenen ersten Zeitintervall (Ti) einen relativen Maximalwert (M_{E}) ermittelt und in einem Speicher (m_{E}) ablegt,
- daß der Rechner (11) ferner aus den Meßwerten in einem zweiten Zeitintervall (T₂) einen absoluten Maximalwert (Mü) ermittelt und in einem Speicher (mü) ablegt
- und daß der Rechner ferner einen Differenzwert (M_{D} = Mü - M_{E}) bildet und in einem weiteren Speicher (m_{D}) ablegt.

2. Vorrichtung nach Anspruch 1, dadurch gekennzeichnet, daß das Zeitintervall (T₁) mittels eines Softwarealgorithmus durch den Rechner (11) ermittelt wird.

3. Vorrichtung nach Anspruch 1 oder 2, dadurch gekennzeichnet, daß das Zeitintervall (T₁) von einem Bediener manuell eingebbar bzw. korrigierbar ist.

4. Vorrichtung nach einem der Ansprüche 1 bis 3, dadurch gekennzeichnet, daß das zweite Zeitintervall (T₂) durch den Rechner (11) ermittelt wird.

5. Vorrichtung nach einem der vorhergehenden Ansprüche, dadurch gekennzeichnet, daß das zweite Zeitintervall (T₂) manuell von einem Bediener eingebbar ist.

6. Vorrichtung nach einem der vorhergehenden Ansprüche, dadurch gekennzeichnet, daß der Rechner (11) aus einer Serie von (1,2,3,...,n) Einschraubversuchen durch Auswertung der Speicher (m_{E1}, m_{E2}, ..., m_{En}; m_{Ü1}, mü₂, ..., m_{Ün}; m_{D1}, m_{D2}, ..., M_{Dn}) Mittelwerte (Mü, M_{E}, M_{D}) bildet.

7. Vorrichtung nach einem der vorhergehenden Ansprüche, dadurch gekennzeichnet, daß die Werte aller Speicher ((m_{E1}, m_{E2}, ..., m_{En;} m_{Ü1}, m_{Ü2}, ..., m_{Ün}; m_{D1}, m_{D2}, ..., M_{Dn}) über die Anzeigeeinheit (13) ausgebbar sind.

8. Vorrichtung nach einem der vorhergehenden Ansprüche, dadurch gekennzeichnet, daß der Rechner (11) zur Ausgabe der Speicher-und/oder Mittelwerte mit einem Drucker (16) oder Plotter verbunden ist.

9. Vorrichtung nach einem der vorhergehenden Ansprüche, dadurch gekennzeichnet, daß sie als tragbare Kompakteinheit ausgebildet ist.

10. Verfahren zum Ermitteln geeigneter Anzugsmomente für Schraubverbindungen mit selbstschneidenden Schrauben unter Verwendung einer Vorrichtung gemäß einem der vorhergehenden Patentansprüche, gekennzeichnet durch folgende Verfahrensschritte:
a) Ansetzen der Schraube am Schraubloch, Aufsetzen des Drehmomentaufnehmers auf dem Schraubenkopf und eines Schraubers auf dem Drehmomentaufnehmer,
b) Betätigung des Schraubers, Start des Zeitintervalls (T₁), Übermittlung der gemessenen Drehmomentwerte an einen Rechner und Abspeicherung derselben in einer Speichereinheit.
c) Ermittlung des relativen Maximums im ersten Zeitintervall (T₁) durch den Rechner und Ablegen des ermittelten Wertes (M_{E}) in einem Speicher (m_{E}) nach Ablauf von Ti.
d) Ermittlung des Maximums im zweiten Zeitintervall (T₂) durch den Rechner und Ablegen des ermittelten (Mü) in einem Speicher (mü) nach Ablauf von T₂,
e) Bildung eines Differenzwertes (M_{D}) durch Abziehen des relativen Maximalwertes (M_{E}) vom absoluten Maximalwert (Mü) und Ablegen des ermittelten Differenzwertes (M_{D}) in einem Speicher (m_{D}),
f) Ausgabe der Werte (Mü, M_{E}, M_{D}) über eine Anzeige und/oder über einen mit dem Rechner verbundenen Drucker.

11. Verfahren nach Anspruch 10, dadurch gekennzeichnet, daß die Verfahrensschritte a) bis f) mehrfach für mehrere gleichartige Schrauben durchlaufen werden und daß
g) der Rechner nach n Einschraubvorgängen Mittelwerte (Mü, M_{E}, M_{D}) aus den Einzelwerten (M_{Ü1}, M_{Ü2}, ..., M_{Ün}; M_{E1}, M_{E2}, ..., M_{E}n; M_{D1}, Mo₂, ..., Moₙ) bildet und
h) die Mittelwerte (M̅ü, M̅_{E}, M̅_{D}) über die Anzeigeeinheit und/oder den angeschlossenen Drucker ausgibt.

12. Verfahren nach Anspruch 11, dadurch gekennzeichnet, daß i) der Rechner aus den Mittelwerten (Mü, M̅_{E}, M̅_{D}) einen Vorschlag für ein Anzugsmoment (M_{A}) berechnet, bei dem M_{A} = M_{E} + xM̅_{D} ist und der Faktor x einen Wert zwischen 0,1 und 0,9, vorzugsweise von 0,5 hat.

13. Verfahren nach Anspruch 12, dadurch gekennzeichnet, daß der Wert M_{A} zur Voreinstellung des übertragenen Drehmoments eines motorisch betriebenen Schraubers verwendet wird.
